Europäisches Patentamt

European Patent Office

Office européen des brevets

(11) Publication number: **0 139 777**

**A1**

(12) **EUROPEAN PATENT APPLICATION**

(21) Application number: **83110761.0**

(22) Date of filing: **27.10.83**

(51) Int. Cl.⁴: **E 04 D 3/08**
**A 01 G 9/14**

(43) Date of publication of application:
**08.05.85 Bulletin 85/19**

(84) Designated Contracting States:
**AT BE CH DE FR GB IT LI LU NL SE**

(71) Applicant: **ROBERTSON BAUELEMENTE GmbH**
**Friedrich-Ebert-Strasse 27**
**D-4052 Korschenbroich 1(DE)**

(72) Inventor: **Kloke, Werner**
**1009 Wardman Crescent**
**Withy Ontario L1N 3HL(CA)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Glazed structural system and components therefor.

㊝ Skylight structures or the like wherein the supporting (18) and supported (20) structural members defining the metal framework including flange formations (62,63,76,77) upon which glass panels are secured are provided with longitudinally extending drainage channel formations (68,69,73) and wherein the open ends (84) of the drainage channel formations (73) of the supported structural members (20) intersect and overlap the drainage channel formations (68,69) of the supporting structural members (18) to the extent that water collected therein is discharged into the drainage channel formations (68,69) of the supporting structural members (18) at a point remote from the inter sections thereof and wherein the structural members (18,20) are interconnected by displaceable clamping means carried by said overlapping ends (84) including a clip (87) embracing same below in the region of overlap and upon displacement upwardly engage the flange formations (62,63) of the supporting structural members (18) from below.

./...

FIG. 2

EP Appln. No. 83 110 761.0
December 14, 1983

**0139777**

GRUNECKER. KINKELDEY. STOCKMAIR & P          ATENTANWÄLTE
                                             ROPEAN PATENT ATTORNEYS

                                             A GRUNECKER. DPL-ING
                                             DR H KINKELDEY. DPL-ING
                                             DR W. STOCKMAIR, DPL-ING.AEE (CALTECH)
                                             DR K SCHUMANN. DPL-PHYS
                                             P. H JAKOB. DPL-ING
                                             DR G BEZOLD. DPL-CHEM
                                             W. MEISTER. DPL-ING
                                             H. HILGERS. DPL-ING
                                             DR H MEYER-PLATH. DPL-ING

                                             8000 MÜNCHEN 22
                                             MAXIMILIANSTRASSE 58

# GLAZED STRUCTURAL SYSTEM AND COMPONENTS THEREFORE

This invention relates to improvements in glazed systems for use in industrial, commercial, institutional and residential buildings, and more particularly to improvements in the support structure derived from lengths of metal extrusions of aluminum or alloys thereof, assembled and connected together to provide an open framework for supporting and anchoring glass or other suitable panels or units thereupon to serve as a skylight or as cladding for a building or in solarium or greenhouse construction and in other similar installations.

More particularly this invention relates to improvements in those mechanical connections to be established between the principal structural members comprising the framework that will accommodate requisite sealing along the intersections or lines of juncture thereof against penetration of atmosphere or of rainwater or other accumulations upon or draining into such framework.

## BACKGROUND TO THE INVENTION

The introduction and wide acceptance of open concept architecture in recent years has given substantial impetus to the investigation and development of improved glazing systems derived from lengths of interconnected extruded metal members and sheets of glazing that not only will embody aesthetic and environmental considerations but more effectively utilize available natural light and solar energy.

Fundamental to the adoption and inclusion of skylights, cladding or other similar systems in building projects is the capability of the selected structure to meet principal objectives apart from those mentioned, such as to effectively limit heat or energy loss, maintenance of the integrity of the enclosed space so as to provide greater control of the interior atmosphere and to ensure stability of the system over a wide range of applied loading and temperatures imposed by the climate and by conditions prevailing within the building.

The development of improved systems has given rise to the desire to incorporate a greater expanse of glazed structure into buildings which must accommodate increased accumulations and increased loading and runoff and thereby increase the risk that the joints and other sealed connections of the expanded system will be penetrated by the atmosphere or by water.

OBJECTS OF THE INVENTION

The principal object of this invention therefore is to provide an improved glazing system that can be specified for all manner of installations and particularly where a wide unsupported expanse of same is required to be installed and wherein the likelihood of any penetration of the atmosphere or water through any mechanical joint or seal is minimized thereby preserving both the integrity of the system itself as well as the environment within the building over an extended period of time.

It is a very important object of this invention to strengthen the structure by providing an improved mechanical connection between the components, which can accommodate to a greater degree twisting and deflection, expansion and contraction imparted by changes in external and internal conditions.

More particularly it is an object of this invention not only to simplify the manner in which the structural members are joined or connected together which gives rise to an increase in efficiency both in production and assembly but to include therewith more efficient barriers to the atmosphere, water or moisture in the region of the joints or connections.

FEATURES OF THE INVENTION

One principal feature of the invention resides in providing a supporting framework for a glazed system wherein the elongated structural members thereof include open ended drainage channel formations therein for the collection of water derived from rain, melted snow or condensed moisture and the controlled discharge of same therefrom without appreciable leakage throughout the extent of such framework by arranging that the open ends of the drainage channel formations of the structural members extending in one common direction intersect and overlap the drainage channel formations of the structural members extending in the other common direction whereby not only is the requisite support of the intersecting overlapping structural members achieved but that water collected in the drainage channel formations thereof is discharged therefrom at a point remote from the intersections with the supporting structural members.

More particularly it is a feature of the invention to provide a building system wherein the supporting structural member includes a longitudinally extending channel defined by a bottom wall, upstanding spaced apart side walls

0139777

4

and a flange formation extending inwardly from at least one of the side walls in overlying spaced relation above the bottom wall and includes a recess within the side wall and associated flange formation which is spaced upwardly from the bottom wall thereof and has a configuration to receive therein one end of the supported structural member in overlapping relation thereto and in full registration with the recess so as to be supported therefrom but above the bottom wall thereof.

It is another feature of this invention to provide a novel clip for securing the supported structural member to the supporting structural member which clip is disposed within the channel formation of the supporting structural member and has a configuration so matching the perimeter of the recess therein and the overlapping end of the supported structural member as to embracingly engage same from below the clip extending beyond the recess to engage the flange formation of the supporting structural member from below upon upward displacement thereof into embracing engagement with the overlapping end of the supported structural member, the overlapping end of the supported structural member carrying screw threaded members for engaging and drawing the clip upwardly thereagainst and into engagement with the flange formation of the supporting structural member whereby a secure mechanical connection is achieved.

Still another feature resides in providing a resilient bond substantially impervious to the atmosphere and to water between the opposed surfaces of the clip and recess and the overlapping end of the supported structural member when fully registered therewithin and secured against separation so as to minimize if not eliminate any penetration of the atmosphere or water through such connection.

More particularly a feature of the invention resides in providing a mechanical connection wherein there is no penetration of the bottom wall of the channel formation of the supporting or supported structural member in a region which would communicate with the interior of the enclosed space, thereby preserving the integrity of the barrier to the outer atmosphere throughout its extent.

Still more particularly a feature of this invention resides in providing a clip for the mechanical connection can be appropriately dimensioned to provide a substantial surface of contact with the overlapping end of this supported structural member thereby extending if desired the area for establishing a resilient bond thereto so as to ensure that the barrier to the penetration of either the atmosphere or water is maintained.

These and other objects and features are to be found in the following description of the preferred embodiment of the invention to be read in conjunction with the sheets of drawings wherein:

Figure 1 is a perspective view of a section of an inclined support system for glazing derived from metal components embodying the invention partly broken away and partly exploded to reveal generally how the structural components thereof intersect and the relationships thereof,

Figure 2 is an enlarged perspective view of one of the principal connection between rafter and purlins as illustrated in figure 1, partly broken away and partly exploded to reveal particularly how the components are joined together,

Figure 3 is an elevational view of a section of the rafter of figures 1 and 2 broken away and showing the manner of inserting and positioning the clip within a rafter for connecting the purlin to the rafter,

Figure 4 is a vertical cross-sectional view of the rafter illustrated in figures 1 and 2 taken along the line 4-4 of figure 2,

Figure 5 is a vertical cross-sectional view of the connected rafter and purlins illustrated in figures 1 and 2 and taken along the lines 5-5 of figure 2,

Figure 6 is a vertical cross-sectional view of the connected rafter and purlins illustrated in figures 2 and 5 taken along the lines 6-6 of figure 2,

Figure 7 is an enlarged perspective view of a section of the sill construction for the inclined glazing system illustrated in figure 1, partly broken away and partly exploded to reveal how the sill components intersect and the relationships thereof,

Figure 8 is an enlarged vertical cross-sectional view of the fully assembled sill structure of the inclined system of figures 1 and 7, partly broken away and taken along the lines 8-8 of figure 7,

Figure 9 is an enlarged vertical cross-sectional view of the assembled head structure of the inclined glazing system illustrated in figure 1, also partly broken away and taken along the lines 9-9 of figure 1.

## THE GLAZED SYSTEM

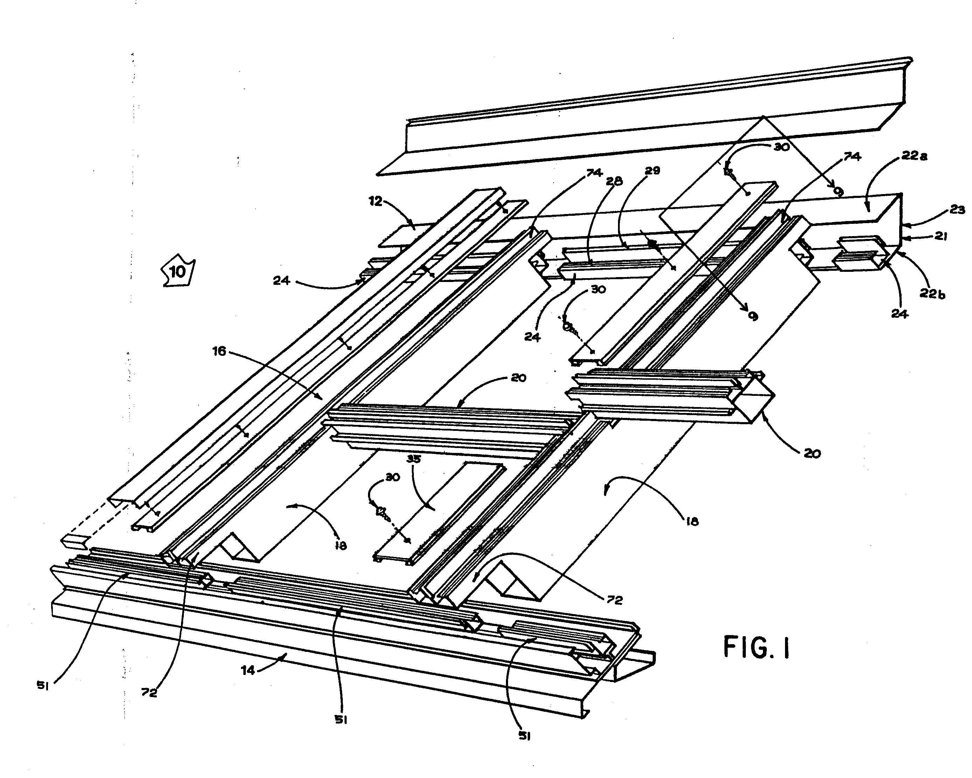

A support system (10) for carrying glass panels or the like embodying the invention and illustrated by the perspective exploded view of figure 1 is comprised essentially of a head structure (12) for securing the system at its uppermost limit to a beam or abutment surface or wall of a building, a sill structure (14) for anchoring the system at its lowermost limit to the foundation or to an abutment surface or wall of a building, and a framework (16) extending between the head structure (12) and sill structure (14) comprised of vertically inclined rafters (18) uniformly spaced apart and horizontally extending uniformly spaced apart purlin members (20) intersecting with rafters (18).

Head structure (12), sill structure (14) and framework (16) are securely fastened together where the components thereof intersect to provide a uniformly inclined resilient framework for supporting suitable glass panels or other selected units in a manner which establishes a substantially impervious seal to the atmosphere to water and to water vapour.

Those components of the invention which fulfill the same function in the preferred embodiment to be described are identified hereinafter by identical numbers, where appropriate.

THE HEAD STRUCTURE (12)

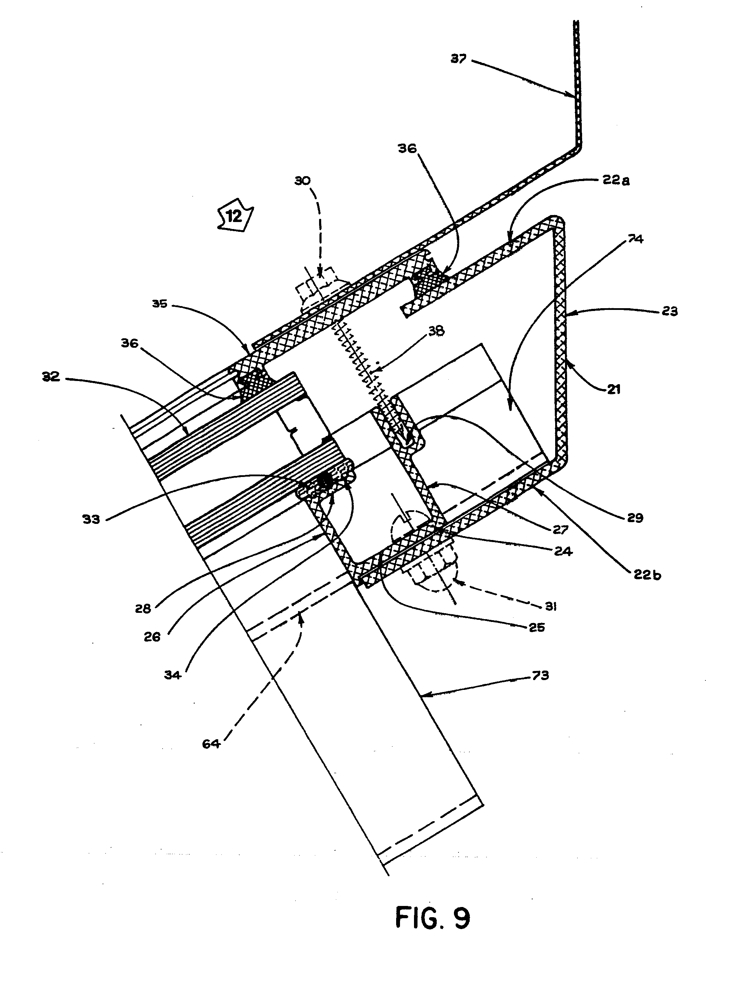

Head structure (12) of figure 1, more particularly detailed in figure 9, is comprised of a main structural support member (21) derived from a suitably formed sheet of aluminum or alloy thereof so as to present a pair of spaced, inclined arm portions (22a, 22b) and a base portion (23), which base portion (23) is arranged to extend along the vertical facing of a supporting beam or abutment and be anchored thereto in any suitable manner.

Mounted upon inclined lower arm portion (22b) of structural member (21) to extend upwardly therefrom is a supporting structural member (24) of extruded aluminum of alloy thereof in a shape to present a base (25) with two spaced upstanding arms (26) and (27), arm (26) presenting an elongated flange or platform formation (28) uppermost and arm (27) presenting an elongated upwardly opening U-shaped anchoring channel formation (29) uppermost for the reception and anchoring of the threaded shafts of pressure plate compression screws (30) as shown in broken outline in figure 9.

Supporting and clamping member (24) is suitably anchored to the lower arm (22b) of structural support member (21) by shear transfer bolts (31) shown in broken outline in figure 9 or other suitable fasteners at requisite spaced intervals.

According to the preferred embodiment of the invention illustrated, double glazed window units (32) are adapted to be mounted within the supporting framework (16) bounded by head structure (12) and sill structure (14), and in the case of supporting structural member (24) of head structure (12), as illustrated in figure 9, the uppermost edge portion of double glazed window unit (32) is supported from the flange or platform formation (28) upon a main seal component (33).

More particularly the upper surface of flange or platform formation (28) is uniformly serrated longitudinally as at (34) so as to provide a positive grip and maintain main seal component (33) in place under the load applied thereto by the overlying or double glazed window unit (32) which is secured against separation from such main seal component (33) by means of pressure plate (35) and associated compressible dry seal elements (36) under the clamping pressure exerted by pressure plate compression screw (30) and by other peripherally located like pressure plates and associated dry seal elements to be described.

It will be observed that dry seal elements (36) carried by pressure plate (35) along each edge thereof within anchoring channels therefore are arranged to bear upon the upper surface of the inclined arm portion (22a) of structural support member (21) and upon the upper surface of double glazed window unit (32) respectively, the pressure plate (35) being arranged to underlie flashing (37) with the pressure plate (35) and flashing (37) being apertured so as to allow penetration of the threaded shaft (38) of pressure plate compression screws (30) therethrough and engage the inner walls of U-shaped anchoring channel formation (29), all as illustrated in figure 1 thereby securing the components against separation.

Main seal component (33) located interiorally of the glazed window unit (32) in the preferred embodiment takes the form of a length of extruded polyisolbutylene semiliquid seal with an embedded continuous neoprene shim. With this arrangement a substituted barrier to the penetration of the atmosphere water and water vapour between window unit (32) and platform formation (28) is established.

Dry seal components (36) are preferably extruded EPDM 60 durometer which key into the aforementioned channel formation presented by aluminum pressure plate (35) at each edge thereof and are held under constant compression of the order of 10 PSI by pressure plate compression screws (30). Compression screws (30) are preferably self-sealing plated steel screws with a self-tapping point capped with a suitable plastic.

SILL STRUCTURE (14)

Still structure (14) illustrated in figures 1, 7 and 8 comprises a base structural support member (40) derived preferably from a suitably formed sheet of aluminum or alloy thereof and includes a base portion (41) and upstanding inclined support portion (42) for supporting and securing extruded aluminum sill member (43) thereto by means of shear transfer bolts (31) but structural support member (40) is separated from extruded sill member (43) by a suitable thermal insulator (44) and shielded by a length of flashing (45).

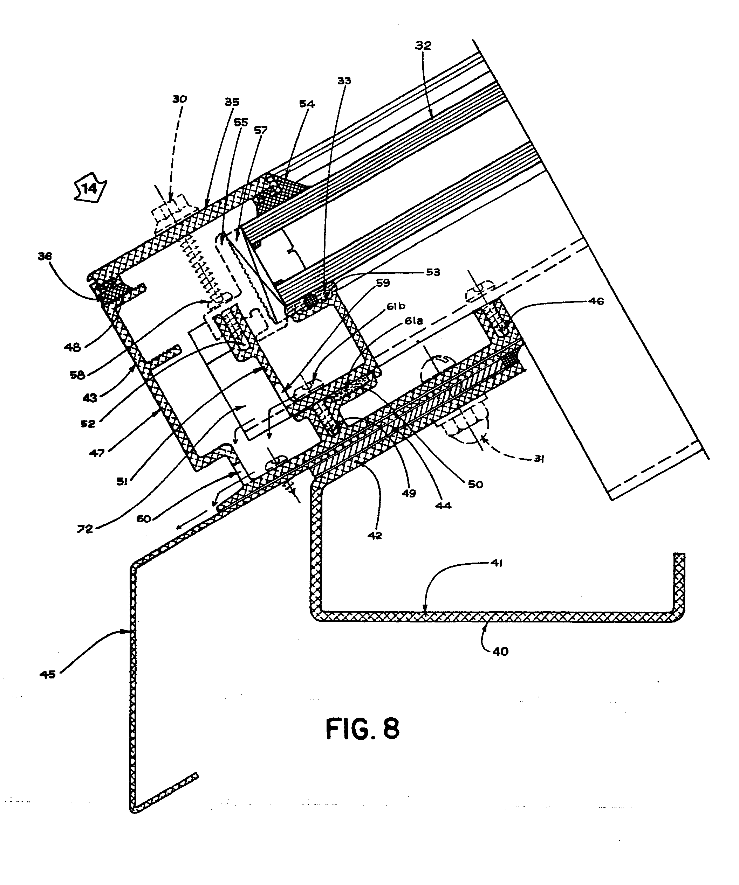

Extruded aluminum sill member (43) is provided with an upwardly opening U-shaped anchoring channel formation (46) along its upper inner edge as depicted in figure 8 and an upstanding bounding wall formation (47) along the lower, outer edge thereof, the latter wall formation (47) presenting a flange or platform formation (48) uppermost suitably serrated longitudinally to provide a gripping surface for a dry seal component (36) of a suitable section of overlying pressure plate (35) to be clamped in position.

A second upwardly opening U-shaped anchoring channel formation (49) is presented by extruded sill member (43) upstanding from the base portion thereof between inner U-shaped anchoring channel (46) and outer upstanding wall formation (47) thereof and including an associated flange or platform formation (50) extending inwardly therefrom upon which an extruded aluminum glass supporting structural member (51) is mounted, which member (51) preferably has a configuration and dimensions in cross-section corresponding to extruded aluminum supporting structural member (24) of head structure (12).

Supporting structural member (51) likewise presents an upwardly opening U-shaped anchoring channel formation (52) along its lower, outer edge and a flange or platform formation (53) along its inner upper edge which flange formation (53) is longitudinally serrated and adapted to support a length of the main seal component (33) upon which the lower edge portion of double glazed window unit (32) bears with the double glazed window unit (32) being clamped against separation under the clamping force applied by the aforementioned length of pressure plate (35) and associated compressible seals, a dry seal component (36) as earlier mentioned and a ramp seal (54) replacing the dry seal component (36) in this embodiment for sealing against the lower edge of window unit (32).

Extruded aluminum supporting structural member (51) is also adapted as illustrated to support the double glazed window unit (32) against downward sliding movement by the provision of an upstanding barrier (55) shown in broken outline which hooks over U-shaped channel formation (52) of clamping member (51) and presents a recess formation (56) opening inwardly and upwardly in spaced relation to the lower end of double glazed window unit (32) to receive and retain therebetween a suitable setting block (57) also shown in broken outline which bears against and prevents the lower edge of the double glazed window unit (32) from displacement downwardly.

Barrier (55) can be secured in place by suitable assembly screws (58) which are adapted to enter within U-shaped anchoring channel (52) all as illustrated in figure 8.

Both extruded aluminum supporting structural member (51) and the extruded sill member (43) are provided with drainage openings (59) and (60) therein respectively which serve to drain or discharge moisture or water collecting in the interconnected drainage channel system of the inclined framework (16) as will be more particularly described as well as to establish communication between such drainage channel system and the atmosphere so that any pressure buildup from water vapour is avoided.

An appropriate sealant (61a) such as liquid butyl is deposited within the confines of flange formation (50) which together with an assembly screw (61b) securing supporting structural member (51) to the extruded sill member (43) establishes an inner barrier to the penetration of the atmosphere or of water or water vapour.

FRAMEWORK (16)

Framework (16) of the inclined glazed system (10) embodying the invention includes rafters (18) which extend upwardly and at a uniform angle between sill structure (14) and head structure (12).

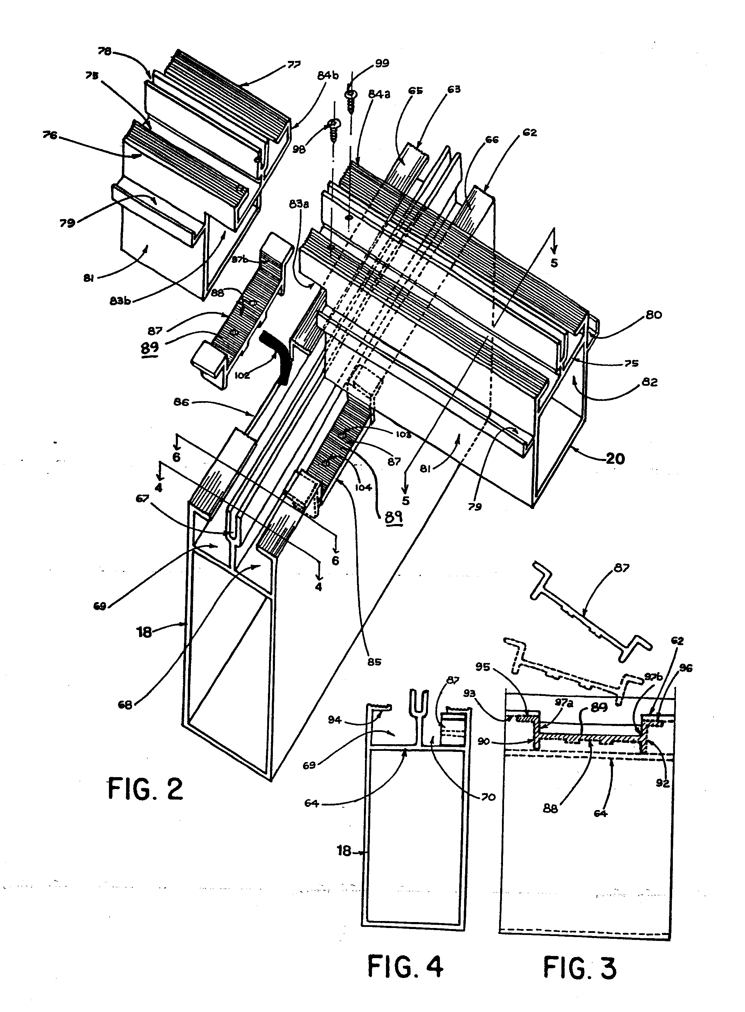

Rafters (18) according to the preferred embodiment illustrated in figures 1 to 4 inclusive are derived from a suitable aluminum extrusion or an alloy thereof and have a tubular configuration or hollow construction as depicted in figures 2, 3, 4 and 6.

Alternative rafter configurations are also appropriate, for example the I shape.

Rafters (18) preferably have a maximum strength to weight ratio and can be provided over a range of depths as may be required.

Rafters (18) of tubular or I shape configuration can be combined if desired in order to meet objectives in any particular setting.

Rafters (18) include a pair of spaced apart walls terminated in inwardly extending opposed flange or platform formations (62) and (63) upstanding from the edges of principal wall (64) thereof and overlying same platform formations (62, 63) being longitudinally serrated as at (65) and (66) so as to provide gripping surfaces for retaining longitudinally extending strips of the main seal component (33) against which the respective side edges of the double glazed window units (32) are to be clamped.

Upstanding centrally from wall portion (64) between flange formations (62) and (63) is an upwardly opening U-shaped anchoring channel formation (67) adapted to receive the threaded shafts (38) of pressure plate compression screws (30) all in a manner as earlier described in connection with the components comprising head structure (12) and sill structure (14).

The configuration of opposite symmetry of upstanding flange formations (62) and (63) separated by U-shaped channel formation (67) define with the wall portion (64) of rafter (18) a pair of open ended drainage channel formations (68) and (69) which extend uninterruptedly throughout the length of rafter (18) from head structure (12) to the sill structure (14) and with openings thereinto extending longitudinally therealong which constitute the main drainage passages.

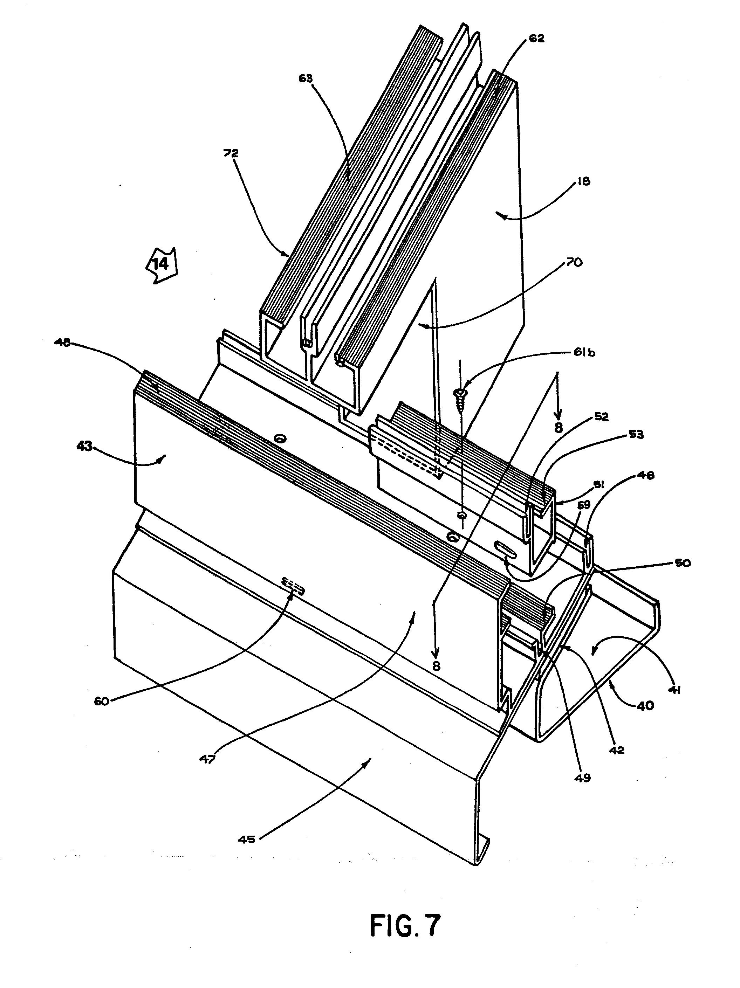

As illustrated in figures 7 and 8 particularly at the intersection of rafter (18) with sill structure (14), rafter (18) is cut away or recessed as at (70) below the principal upper wall portion (64) to thereby present to sill structure (14) a projecting portion (72) which is adapted to overlie extruded sill member (43) and terminate inwardly of upstanding wall formation (47) whereby any drainage is discharged below the juncture of rafter (18) with sill member (43).

Extruded aluminum supporting structural members (51) of the sill structure (14) are dimensioned such that they extend between the projecting portions (72) of rafters (18) with the ends of such members (51) abutting the outer surfaces of flange formations (62) and (63) of projecting portions (72) and rafter (18) respectively.

Flange formations (53) of extruded supporting structural member (51) are appropriately dimensioned and arranged so as to register with opposed flange formations (62) and (63) of rafter (18) respectively whereby the serrated gripping surfaces thereof for main seal component (33) are disposed in substantially coplanar relation.

Likewise in relation to head structure (12) the upper ends of rafters (18) are recessed as at (73) below the principal upper wall portions (64) thereof to provide upper projecting portions (74) which overlap the upper surface of the lower arm portion (22b) of main structural support member (21) and anchored thereto by means of shear transfer bolts (31).

Likewise the ends of supporting structural members (24) of head structure (12) and the outer surfaces of the projecting portions (74) of rafters (18) the dimensioning of the supporting structural members (24) likewise being selected and the components arranged so that the flange formations (28) thereof register with the opposed platform formations (62) and (63) of rafters (18). Thus the serrated surfaces of the respective flange formations are disposed in substantially coplanar relation for the reception of the lengths of the main seal components (33) to provide a perimetral barrier therearound when a double glazed window unit (32) is clamped into position thereupon.

It will be observed from figure 1 that purlins (20) of the framework (16) intersect with rafters (18) at intervals.

Purlins (20) are likewise preferably derived from an aluminum extrusion or alloy thereof.

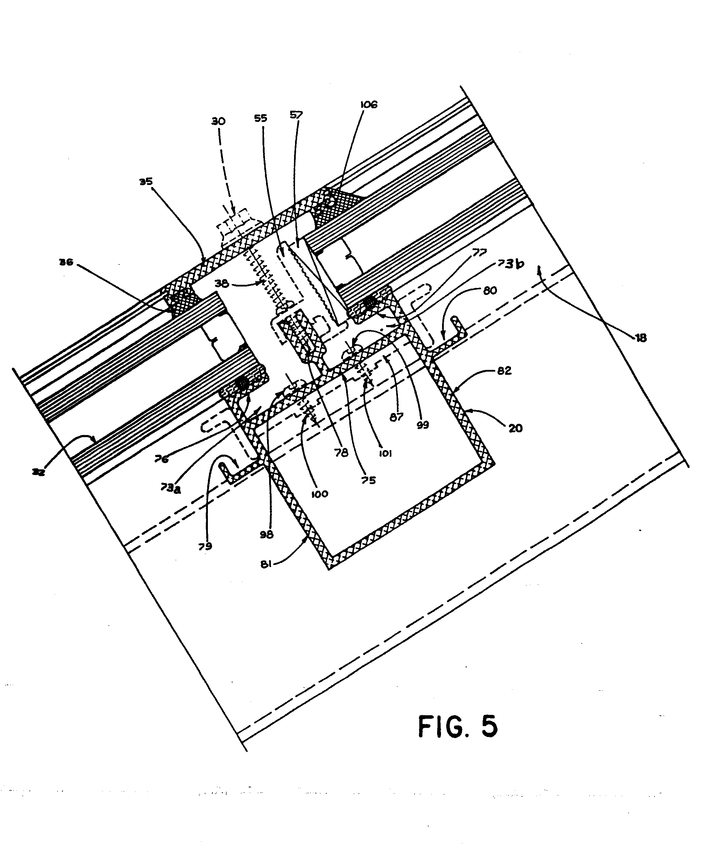

According to the preferred embodiment as particularly illustrated in figure 5 purlins (20) have a tubular or hollow construction with the principal wall portion (75) thereof presenting spaced apart upwardly extending walls terminating in inwardly extending opposed flange or platform formations (76) and (77) respectively located above wall portion (75) thereby defining a pair of channel formations as at (73a, 73b).

Opposed flange formations (76) and (77) are separated by a centrally located upwardly extending U-shaped anchoring channel formation (78) which is adapted to cooperate with the threaded shafts (38) of the pressure plate compression screws (30) all in a manner earlier explained in connection with the head structure (12) and sill structure (14).

Purlins (20) in addition are provided with condensation channel formations (79) and (80) extending outwardly from the opposed wall portions (81) and (82) thereof to trap any moisture condensed on the surfaces of the purlins or on the inner surfaces of the double glazed window units (32) next to the main seal connection established therebetween.

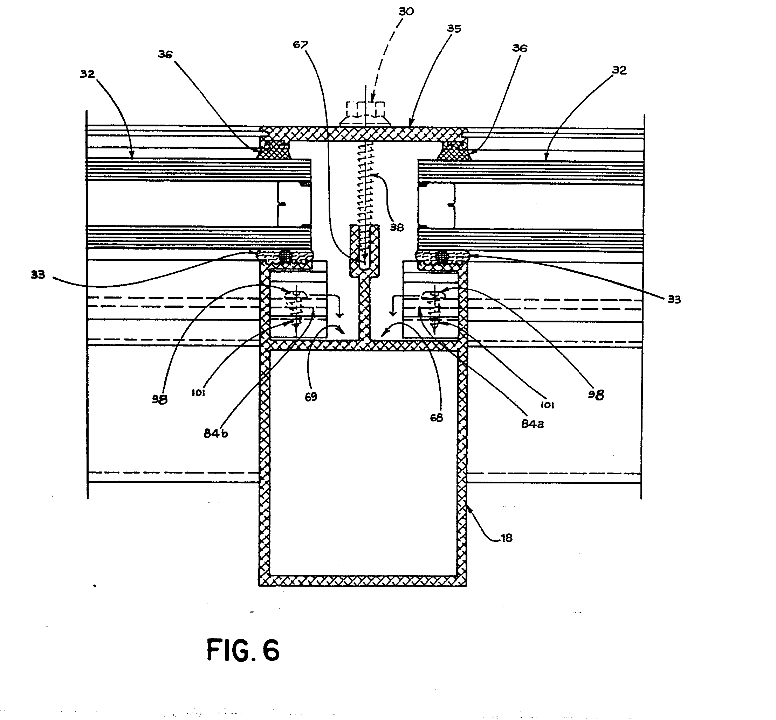

According to the invention the ends of purlins (20) are cut away as at (83a) and (83b) respectively below the principal wall portion (75) thereof and thereby present projection portion (84a) and (84b) at each end which as illustrated in figure 6 are adapted to overlap the juncture with rafters (18) and discharge any water or condensed water vapour collected therein into drainage channel formations (68) and (69) respectively of the rafter (18) inwardly of the aforementioend intersection.

Projection portions (84a) and (84b) are adapted to register within opposed recesses or openings (85) and (86) respectively formed in opposed wall and flange or platform formations (62, 63) of rafter (18), which recesses (85) and (86) have a perimeter matching the perimeter of projection portions (84a, 84b) of purlins (20) registered therewith.

This arrangement ensures that a substantially rigid connection between rafters (18) and purlins (20) in a direction longitudinally of the rafter (18) and preserves the seal to be established therebetween as will be described.

Underlying each of projection portions (84a, 84b) of purlin (20) and located within each drainage channel formation (68, 69) respectively of rafter (18) are like separable metal novel clips (87) derived from a length of suitable aluminum extrusion or alloy thereof.

Clips (87) each include a central platform portion or web (88) as best seen in figures 3 and 4 flanked by a pair of upstanding wall portions (90) and (92), legs (90) and (92) having an extent such that the central platform formation or web (88) is supported slightly above the main wall portion (64) of rafter (18) and bridge the separation between such main wall portion (64) and the undersurfaces (93, 94) of the respective flange formations (62, 63) of rafter (18) next adjacent recesses (85, 86).

Wall portions (90, 92) terminate uppermost in (96) respectively, which project from wall portions (90, 92) in opposed directions to lie next below undersurfaces (93, 94) of the respective flange formations (62, 63) next adjacent openings (85, 86).

Clips (87) are dimensioned so that the upper surface (89) of central platform formation (88) thereof and the inner surfaces (97a, 97b) respectively of wall portions (90, 92) will register with and match the outline or perimeter of the recesses (85, 86) of each of the respective flange formations (62, 63) and form an inward extension thereof thus together with the perimeter of recesses (85, 86) both embracing and supporting the projecting portions (84a, 84b) of the intersecting purlins (20) therewithin respectively.

Upper surface (89) of central platform formation (88) of clip (87) and the surfaces (97a, 97b) of the legs (90, 92) thereof are suitably serrated as illustrated in figure 2 so as to provide an extended gripping surface to a selected sealant such as liquid butyl to bond with and effectively seal the separation between rafters (18) and purlin (20) under clamped engagement therebetween.

The particular connection between rafter and purlin so described is adapted to be achieved by means of assembly screws (98, 99) which penetrate that portion of the wall (75) of purlin (20) lying within the extent of the projecting portions (84a) and (84b) thereof beyond the line of juncture or intersection between purlin and rafter.

The threaded shafts (100, 101) of assembly screws (98, 99) register within apertures (103, 104) presented by platform formation (88) of clips (87) and draw clips (87) upwardly and force projecting portions (84a, 84b) of purlins (20) downwardly to achieve tight clamping engagement between upper surfaces (89) of central platform formations (88) and the lower surfaces of the principal upper wall portion (75) and the surfaces of the side wall portions (81, 82) of the projecting portions (84a, 84b) of purlins (20) to which the aforementioned sealant has been adhered.

This clamping action exerted by the assembly screws (98, 99) in establishing a connection between purlins (20) and clips (87) urges the wing extensions (95, 96) of clips (87) into engagement with the undersurfaces (93, 94) of the respective flange formations (62, 63) of rafter (18) thereby resiliently anchoring purlins (20) to rafter (18) and notably without the threaded shafts (100) and (101) of assembly screws (98, 99) penetrating the principal upper wall portion (64) of rafter (18).

Accordingly in so far as framework (16) is concerned there is no breach by an assembly screw or other fastener of any principal wall portion (64) of rafter (18) which serves as the bottom wall for drainage channels (68, 69) or any principal wall portion (75) of purlin (20) which serves as the bottom wall for drainage channels (73a, 73b) in any region except where the projecting portions (72) and (74) of the rafter (18) overlap the supporting structural support member of the head structure (12) or sill structure (14) or except where the projecting portions (84a, 84b) of the purlins (20) overlap the drainage channel formations (68, 69) of rafters (18). Thus the integrity of the metal barrier constituted by structural members is preserved.

One of the clips (87) illustrated in figure 2 of the drawings is shown in place immediately prior to being clamped by assembly screws (98, 99) to purlin projecting portion (84a). The relationship established between inserted clip (87) and upstanding flange formation (62) with clip (87) in place is illustrated by figure 4 of the drawings.

The other clip (87) illustrated in figure 2 which is likewise adapted to secure and anchor purlin projecting portion (84b) to arrow (102) indicating the direction of inserting such clip (87) within such opening (86) and below the adjacent ends of flange formation (63) presented to recess (86).

More particularly in figure 3 the manner of inserting clip (87) within the drainage channel formations of the rafter (18) to register with the openings (85, 86) is shown in stages by means of solid and broken outline whereby clip (87) is ultimately seated in full registration with the opening (86).

The preferred sealant liquid butyl which is applied and spread over the upper serrated surfaces (89) of central platform formation (88) and surfaces (96, 97) of wall portions (91, 92) of clips (87) as well as over the edges of the respective recesses (85, 86) in rafter (18) and
over the mating surfaces of the projecting portions
(84a, 84b) of purlins (20) is cured filling up any
separation therebetween and establishing  a strong
resilient bond between opposed surfaces thereby ensuring
that a substantially permanent barrier will persist
minimizing if not eliminating penetration of atmosphere
water or water vapour from the drainage channels (68, 69)
of the rafters (18) to the space enclosed by the glazed
system.

It will be understood that this resilient connection
derived by clamping purlins (20) to rafters (18) in
the manner outlined creates a resilient bonding along
with a mechanical connection that is derived from clamping
engagement as opposed to direct attachment of purlin to
rafter by a bracket and threaded fasteners. This
connection or joint will withstand the loading generated
by the expansion and contraction of the components over
a wide range of temperatures and deformation to which
the structure is subjected by climate, interior heating
and forces generated by the wind or by rainwater or under
accumulations of snow or ice.

It is also to be observed that purlins (20) of framework
(16) are appropriately dimensioned so as to present to
flange formations (62, 63) of rafters (18) the opposed
purlin flange formations (76, 77) as particularly
illustrated in figures 5 and 6 thus establishing the
substantially coplanar relationship to support the lengths
of the main seal component (33) which underlie the edges
of the double glazed window  units (32) and provide a
continuous main peripheral seal (33) peripherally below
such window units.

More particularly, it is to be observed that the opposed
purlin flange formations (76, 77) together with purlin
upper wall (75) and centrally located and upstanding U-shaped anchoring channel (78) define a pair of drainage channels (73a) and (74a) for collecting and discharging rainwater or condensed water vapour to the drainage channel formations (68) and (69) of rafters (18).

Figure 6 of the drawings shows that the open ends of purlin projecting portions (84a, 84b) are spaced from the central upstanding U-shaped anchoring channel formation (67) of rafter (18) so that drainage from channel formations (73a) and (74a) is unobstructed for the ready discharge of accumulated runoff or condensed vapour.

System (10) established by the intersecting interconnected rafters (18) and purlins (20) appropriately anchored and completed by head structure (12) and the sill structure (14) as outlined provide the requisite uninterrupted perimetral support for double glazed window units (32) clamped in place sealed outermost under the clamping pressure exerted by pressure plates (35) and pressure plate compression screws (30) and associated dry seals (33) and ramp seals (54) against the outer surface of window units (32) constituting a first barrier to the penetration of the atmosphere or rainwater.

Each such clamped window unit (32) supported upon framework (16) is bounded by an interior peripheral drainage channel formation comprised of drainage channels (68) or (69) of rafters (18) or drainage channels (73a) and (74a) of purlins (20) and lowermost by the channels (105) defined within extruded supporting structural members (51) of sill structure (14).

Any rainwater or melted snow or ice penetrating the seals of pressure plates (35) or water vapour condensing within the interior drainage channels will be directed to the sill structure and ultimately discharged to the atmosphere through drainage openings (59) and (60).

It is essential in the mounting of the double glazed window units (32) within the supporting framework (16) that appropriate double glazing supports in the form of an upstanding barrier (55) and setting blocks (57) be installed where necessary as shown in broken outline in figure 5, which arrangement corresponds to that employed in the sill structure (14).

Further it is to be understood that in the case of the seals associated with the pressure plate sections (35) which are to be secured to purlins (20) the upper seals are preferably ramp seals as indicated at (106) in figure 5. The ramp seal (106) of figure 5 and ramp seal (54) of figure 8 provide a greater surface of gripping contact and thereby tend to preserve the integrity of the connection as well as better deflect any descending rainwater or accumulations of snow or ice lodged on the exterior surface.

It will be understood that the intersecting pressure plates (35) are suitably cut and placed to overlie and isolate from the exterior the entire interior drainage channel system by means of associated seals (33) and ramp seals (54) and (106) and are to be maintained under a clamping pressure of the order of 10 PSI against the perimeters of the double glazed window units (32) to preserve the connection.

With such an arrangement the major proportion of the components of the metal framework (16), the head structure (12) and the sill structure (14) are likewise isolated from the exterior atmosphere with the practical result that a maximum metal surface is exposed to the temperature of the interior with the minimum metal surface exposed to the exterior. Thus such an arrangement minimizes heat transfer to and from the interior or enclosed space and brings the control of the interior atmosphere within better defined limits.

The second barrier to penetration is constituted by the interior drainage channel system which include the down-sloped overlapping projection portions of the respective purlin and rafters all exteriorally located of the main seal components (33) and therebetween thereby minimizing the likelihood of penetration of the atmosphere or water into the enclosed interior space and thereby preserving its integrity.

Finally by reason of the novel clamping interlock between rafter (18) and purlins (20) by means of the clip (87) and associated assembly screws and the resilient bond established therebetween by the confined sealant a flexible connection or joint capable of accomodating loading due to expansion and contraction over a wide range of temperatures and applied forces is achieved while any penetration therebetween is blocked.

It will be understood that this invention gives rise to the ready provision of a much greater expanse of substantially impenetrable glazed structure than heretofore contemplated and thereby extends the boundaries of open concept architecture.

The framework (16) can be supported along the sides thereof between the head structure (12) and sill structure (14) by a variety of structural alternatives derived from formed aluminum sheeting anchored to suitable supporting members or walls in a manner similar to that illustrated in connection with the head structure or to adjacent like glazed frameworks as for example angled to one another in multifaceted skylight construction.

Modified shapes or configurations of rafters (18) and purlins (20) may be substituted for these illustrated to provide a dome-like or barrel vault structure according to specification.

Single glazing or triple glazing may be substituted for double glazing.

It will be understood therefore that it is intended that changes can be made in the preferred embodiment described and illustrated herein by those persons skilled in this field without departing from the spirit and scope of the invention as defined in the appended claims.

CLAIMS:

The embodiments of the invention in which an exclusive property or privilege is claimed are defined as follows:

1.      In a roof structure, a plurality of rafters arranged in inclined substantially uniformly spaced apart relation  and provided with a plurality of opposed recess means therein at uniformly spaced apart intervals therealong and a plurality of purlins extending therebetween with the ends thereof projecting into and fully registered within said opposed recess means of said rafters so as to intersect therewith and be supported therefrom, each said purlins and rafters including longitudinally extending open ended drainage channel means therein and opening upwardly longitudinally centrally therealong, said drainage channel means being defined by a bottom wall, upstanding spaced apart side walls and flange means extending inwardly from said side walls and in spaced apart opposed overlying relation to said bottom wall, each said recess means of said rafters having a perimetral extent within said side walls and flange means thereof and the respective depths of the channel means of said purlins and rafters being such that in full registration said intersecting flange means of said purlins and rafters are disposed in substantially coplanar relation and water collected in the channel means of said purlins is discharged therefrom downwardly into the channel means of said rafters at a point inwardly spaced from the side walls of said rafters and displaceable means carried by said purlins at the ends thereof for engagement with said channel means of said rafters for securing said purlins and rafters against separation.

2.      A roof structure according to claim 1 wherein said displaceable means for securing said rafters and purlins against separation includes clip means disposed within the channel means of said rafters, said clip means having a configuration so matching the perimeter of said recess means therein as to embracingly engage said ends of said purlins projecting thereinto from below, said clip means extending beyond said recess means to engage said flange means of said rafters from below upon upward displacement thereof into embracing engagement with the ends of said purlins, and means carried by said ends of said purlins for displacing said clip means upwardly thereagainst and into engagement with said flange means of said rafters to thereby secure same against separation.

3.      A roof structure according to claim 2 wherein the surfaces of said clip means and recess means presented to the surfaces of said ends of said purlins when fully registered therein and secured against separation are joined thereover by resilient bonding means substantially impervious to the atmosphere and to water.

4.      A roof structure according to claims 1, 2 or 3 wherein each said rafter and purlin includes anchoring means upstanding from the bottom walls thereof and between said opposed flange means thereof and means overlying said flange means and said anchoring means and operatively engageable with said anchoring means whereby panel means to be supported upon said flange means thereof are secured thereto against separation.

5.      A roof structure according to claim 4 wherein said means overlying said flange means and said anchoring means and operatively engageable with said anchoring means comprises elongated plate means and screw threaded means carried by same centrally thereof, said screw threaded means being engageable in said anchoring means to draw said elongated plate means downwardly to engage over the edges of panel means to be supported upon said opposed flange means of said rafters and purlins.

6.    A roof structure according to claim 5 wherein said elongated plate means includes resiliently compressible sealing means along the opposed edges thereof and projecting therebelow, whereby under forces of compression applied thereto and against the edges of panel means to be supported upon said opposed flange means a seal substantially impervious to the penetration of atmosphere and water is established.

7.    In a building system wherein a plurality of elongated structural members are arranged and interconnected in angled relation to one another and present a substantially rigid rectilinear flange formation to the edges of panel means to be supported thereupon, said structural members including open ended drainage channel formations therein extending perimetrally of said flange formation and therebelow and outwardly therebeyond whereby drainage thereinto from above can be channeled therealong and discharged therefrom, the ends of the drainage channel formations of said structural members arranged in one common direction intersecting and overlapping the drainage channel means of said structural members arranged in the other common direction so as to be supported therefrom and to the extent that water collected therein is discharged into the drainage channel formation of said supporting structural members at a point remote from the intersections thereof.

8.    A system according to claim 7 wherein at least some of said structural members present opposed perimetrally extending flange formations which flank said drainage channel formations therein whereby more than one panel means can be supported thereupon from their edges in side by side relation.

9.    A system according to claims 7 or 8 wherein each said structural members include anchoring means upstanding therefrom in the region of said channel formations outwardly beyond said flange formations and displaceable means engageable with said anchoring means for securing against separation panel means to be supported thereupon from its edges.

10. A system according to claims 7, 8 or 9 wherein said structural members are interconnected at their intersections by displaceable clamping means including means embracing from below each such drainage channel formation of said supporting structural member in the region overlapping the drainage channel formation of the supporting structural member, said embracing means extending therebeyond and into engagement with the flange formation of said supporting structural members from below.

11. In a building system wherein a first elongated structural member is adapted to support a second elongated structural member therefrom and each such structural member includes a longitudinally extending open ended channel means therein defined by a bottom wall upstanding spaced apart side walls and flange means extending inwardly from at least one of said side walls in overlying spaced relation above said bottom wall, said first structural member including recess means within said side wall and associated flange means and spaced upwardly from the bottom wall thereof, and having a configuration to receive therein one open end of said second structural member in overlapping relation to said first structural member and in full registration therewith so as to be supported therefrom above said bottom wall thereof, means for securing said second structural member to said first structural member including clip means disposed within the channel means of said rafter, said clip means having a configuration so matching the perimeter of said recess means therein and said overlapping end of said second structural member as to embracingly engage same from below, said clip means including extensions projecting beyond said recess means to engage said flange means of said first structural member from below upon upward displacement thereof into embracing engagement with said overlapping end of said second structural member, and means carried by said overlapping end of said second structural member for drawing said clip means upwardly thereagainst and said projecting extensions into engagement with said flange means of said first structural member.

12. A building system according to claim 11 wherein said clip means includes platform means bounded by upstanding spaced apart wall means extending inwardly from said recess means of said first strucutal member below and flanking respectively said overlapping end of said second structural member and screw threaded means carried by said overlapping end of said second structural member engageable with said platform means to draw same upwardly thereagainst and into engagement with said flange means of said first structual member.

13. A building system according to claims 12 or 13 wherein the surfaces of said clip means and said recess means presented to the surfaces of said overlapping end of said second structural member, when fully registered therein and secured against separation are joined thereover by resilient bonding means substantially impervious to the atmosphere and to water.

14. A building system according to claims 11, 12 or 13 wherein said recess means of said first structural member has a perimetral extent within said side wall and associated flange means thereof and the respective depths of the channel means thereof are such that in full registration said flange means intersect and are disposed in substantially coplanar relation.

FIG.I

FIG. 2

FIG. 4

FIG. 3

0139777

FIG. 5

FIG. 6

0139777

FIG. 7

FIG. 8

0139777

FIG. 9

European Patent Office

**EUROPEAN SEARCH REPORT**

Application number

EP 83 11 0761

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 830 029 (VANCE) <br> * Column 3, lines 26-68; column 4; column 5; figures 2,3,4 * | 1,4-9 | E 04 D 3/08 <br> A 01 G 9/14 |
| A | | 11,14 | |
| X | DE-A-2 328 665 (ROPER) <br> * Page 6, paragraphs 2,3; pages 7,8; page 10, paragraphs 2,3; pages 11-14; figures 4-7 * | 1,4-9 | |
| A | | 11,14 | |
| A | FR-A-2 507 648 (QUATRE CHEMINS) <br><br> * Page 3; page 4, lines 1-21; page 5, lines 6-23; figures 1,2 * | 1,2,4-12 | TECHNICAL FIELDS SEARCHED (Int. Cl. 3) |
| A | FR-A-1 264 130 (HILLS) <br><br><br> * Page 2, column2, paragraphs 3-6; pgae 3, columns 1,2; page 4, column 1, paragraphs 1,2; figures 1-4 * | 1,2,7, 8,10, 11,12, 14 | E 04 D <br> A 01 G <br> E 04 B |

The present search report has been drawn up for all claims

| Place of search | Date of completion of the search | Examiner |
|---|---|---|
| THE HAGUE | 19-06-1984 | HENDRICKX X. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82